# EUROPÄISCHE PATENTANMELDUNG

(11) **EP 1 609 564 A2**
(43) Veröffentlichungstag der Anmeldung: **28.12.2005**
(21) Anmeldenummer: 05010970.1
(22) Anmeldetag: 20.05.2005
(51) Int. Cl.: B25B 23/14, B23P 19/06

(54) **Verfahren zum Ermitteln des Soll-Anzugsmoments**

(30) Priorität: 25.06.2004 DE 102004030772
(71) Anmelder: Bayerische Motoren Werke Aktiengesellschaft, 80809 München (DE)
(72) Erfinder: Brandl, Oskar, 94419 Reisbach (DE)

(57) **Zusammenfassung**

Um ein Soll-Anzugsmoment von Schraubverbindungen, insbesondere von medienführenden Leitungen, sicher zu ermitteln, wird das die medienführende Leitung dichtend aufnehmende Kupplungsstück oder Bauteil auf Höhe seines inneren Gewindeauslaufs durchgetrennt und das zur Ausübung einer notwendigen Anpresskraft aufzubringende Anzugsmoment ermittelt.

## Beschreibung

Die Erfindung bezieht sich auf eine Vorrichtung nach dem Oberbegriff des 1. Anspruchs, einer Verwendung des Verfahrens nach Anspruch 5 und 6 sowie einer Vorrichtung zur Durchführung des Verfahrens gemäß Anspruch 7.

Gerade bei medienführenden Leitungen in Kraftfahrzeugen, wie Bremsleitungen, Kraftstoffleitungen, ist es erforderlich, dass diese an ihren Anschlussstellen dicht sind. Die Dichtigkeit kann zum einen dadurch nicht erreicht werden, dass die Schraubverbindung nicht fest genug angezogen wird, zum andern aber auch dadurch, dass sie zu fest angezogen wird, so dass das als Leitungsende ausgebildete Kegelstück deformiert wird und damit undicht wird.

Üblicherweise werden bei derartigen Schraubverbindungen Soll-Anzugsmomente ermittelt, die dann für alle Schraubverbindungen des gleichen Types gelten, unabhängig davon, ob die zu verschraubenden Bauteile vom gleichen Hersteller sind oder nicht.

Aufgabe der vorliegenden Erfindung ist es, ein Verfahren und eine Vorrichtung zur Durchführung des Verfahrens bereitzustellen, mit dem das notwendige Soll-Anzugsmoment sicher ermittelt werden kann.

Diese Aufgabe wird erfindungsgemäß durch die Merkmale des ersten Anspruchs gelöst.

Die Erfindung fußt auf der Erkenntnis, dass die Einflüsse durch die Gewindereibung dann vernachlässigt werden können, wenn das Bauteil mit dem Innengewinde an seinem inneren Gewindeauslauf abgetrennt wird und dann die durch das Einschrauben der Schraube, Überwurfschraube, etc. ausgeübte Kraft auf das abgetrennte Bauteil gemessen wird bzw. wenn bei Erreichen der vorbestimmten Anpresskraft das dazugehörige Anzugsmoment festgestellt wird. Der Vorteil der Erfindung liegt darin, dass alle Einflüsse aus der Materialpaarung Schraube - Gewinde bei Ermittlung der Schraubenkraft außen vorgelassen werden und nur tatsächlich die ausgeübte Schraubenkraft berücksichtigt wird. Damit ist es möglich, die Schraubverbindungen flüssigkeitsdicht anzuziehen.

Die Unteransprüche beschreiben vorteilhafte Ausgestaltungen der Erfindung.

Die Weiterbildung nach Anspruch 2 hat den Vorteil, dass für jede tatsächlich verwendete Schraubverbindung das notwendige Soll-Anzugsmoment ermittelt wird, wenn beide Teile Originalbauteile sind, da je nach Hersteller die Schraubenkraft bei gleichem Anzugsmoment unterschiedlich sein kann.

Je nach Erfordernis kann gemäß Anspruch 4 auch der Drehwinkel gemessen werden neben dem Anzugsmoment.

Besonders vorteilhaft lässt sich das erfindungsgemäße Verfahren dann anwenden, wenn bei medienführenden Leitungen in Kraftfahrzeugen das notwendige Anzugsmoment bestimmt wird. Hierbei wird als Bauteil mit einem Außengewinde eine Überwurfmutter verwendet, mit der das zu einem Dichtwulst ausgeformte Ende der medienführenden Leitung an ein Kupplungsstück oder ein Bauteil flüssigkeitsdicht angeschraubt wird.

Es ist jedoch genauso gut möglich, mit dem erfindungsgemäßen Verfahren das Soll-Anzugsmoment von Gewindestiften in Sacklochbohrungen zu bestimmen.

Die Ansprüche 7 bis 9 beschreiben eine bevorzugte Vorrichtung zum Durchführen des erfindungsgemäßen Verfahrens. Diese Vorrichtung ist hierbei einfach aus wenigen Bauteilen aufgebaut, ohne unzuverlässig zu arbeiten.

Im Folgenden wird die Erfindung anhand eines bevorzugten Ausführungsbeispiels näher beschrieben. Es stellen dar:
- Figur 1: eine schematisierte Ansicht der erfindungsgemäßen Vorrichtung;
- Figur 2: ein Detail aus Figur 1;
- Figur 3a: eine Draufsicht auf ein Innengewindestück;
- Figur 3b: eine Seitenansicht des Innengewindestückes nach Figur 3a;
- Figur 4: eine Detailansicht nach Figur 1 für ein alternatives Ausführungsbeispiel.

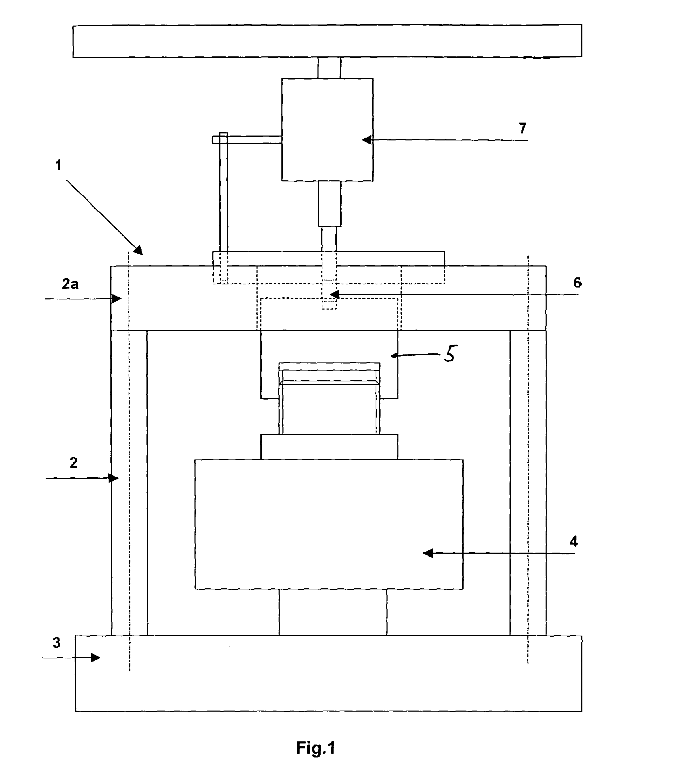

Die Vorrichtung 1 gemäß Figur 1 besteht aus einem U-förmigen Rahmen 2, der an einer Grundplatte 3 befestigt ist.

Mit 4 ist ein Zug- und Druckkraftaufnehmer bezeichnet, der an der Grundplatte 3 befestigt ist. Seine Messeinrichtung ragt über einen Adapter 5 in das Querjoch 2a des U-förmigen Rahmens 2. Hier befindet sich die Probenaufnahme 6.

Oberhalb der Probenaufnahme ist eine Drehmoment- und Drehwinkelmesseinrichtung 7 angeordnet.

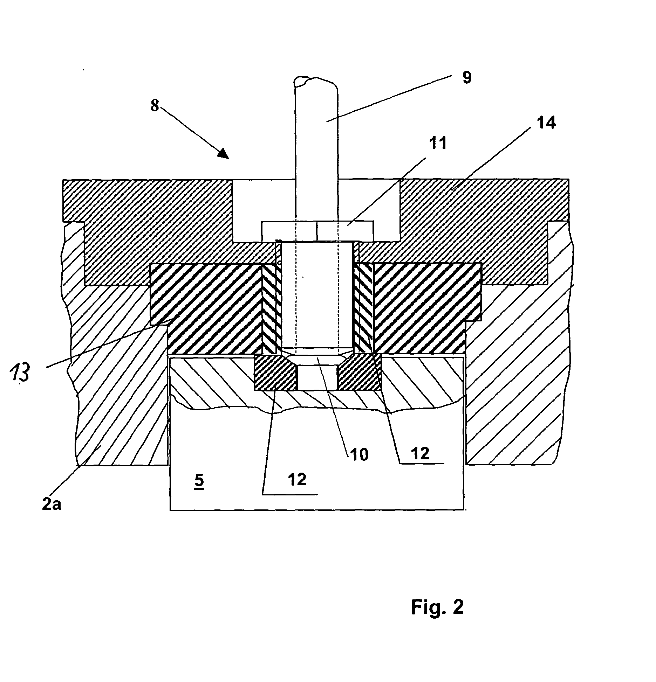

In Figur 2 ist die Probenaufnahme näher dargestellt. Gleiche Bauteile sind mit gleichen Bezugsziffern versehen.

Als Probe 8 dient die Verschraubungsstelle einer medienführenden Leitung an einer Kupplungsstelle oder an einem Bauteil.

Dementsprechend weist die Probe 8 ein Stück der medienführenden Leitung 9 auf. Diese medienführende Leitung ist - wie allgemein bekannt - an ihrem Ende mit einem Wulst 10 versehen, der über eine Überwurfschraube 11 in ein Kupplungsstück 12 dichtend eingepresst wird. Die medienführende Leitung ist gegen Verdrehen während des Anziehens der Überwurfschraube 11 gesichert.

Die Probenaufnahme 6 besitzt eine an die Form der Probe 8 angepasste Führung 13, in der das Kupplungsstück 12 eingesetzt wird.

In axialer Richtung wird das Kupplungsstück 12 von einem Gegenlager 14 gehalten. Das Gegenlager 14 weist zum Ansatz der Drehmoment-/Drehwinkeleinrichtung 7 eine entsprechende Aussparung auf, so dass ― über einen nicht gezeigten Adapter ― die Schlüsselangriffsfläche der Überwurfschraube 11 mit der Drehmoment-/Drehwinkeleinrichtung 7 verbunden werden kann.

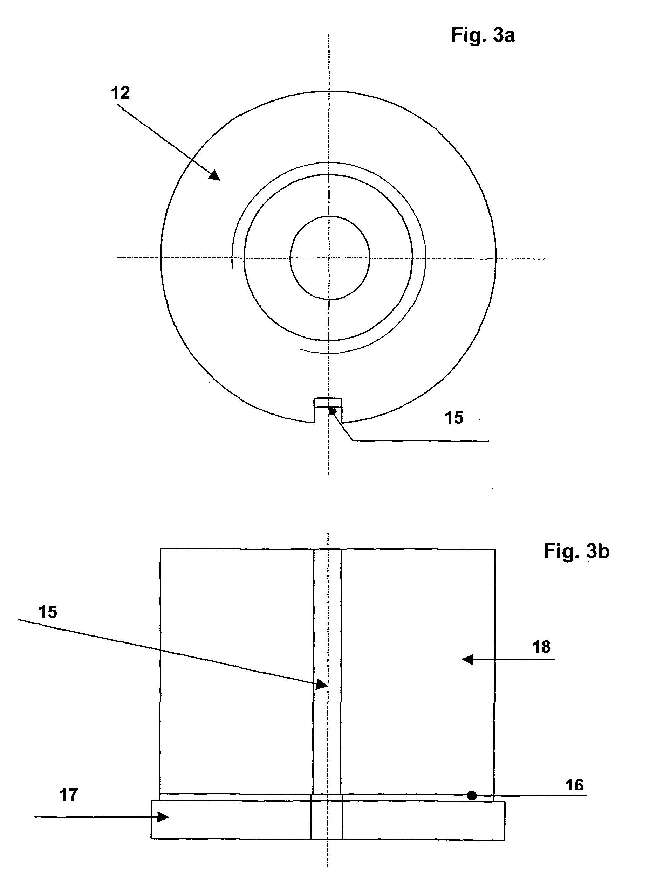

In Figur 3a ist eine Draufsicht auf das Kupplungsstück 12 dargestellt. Hier sieht man deutlich die Längsnut 15, die mit einer nicht näher dargestellten Nase in der Führung 13 zusammenwirkt und ein Mitdrehen des Kupplungsstückes 12 beim Einschrauben der Überwurfschraube 11 verhindert.

Bevor das Kupplungsstück 12 in die Führung 13 bzw. den Adapter 5 eingesetzt wird, wird das Kupplungsstück 12 auf Höhe des inneren Gewindeauslaufs senkrecht zur Gewindelängsrichtung anhand einer Trennfuge 16 durchgetrennt, so dass ein abgetrenntes Teilstück 17 und ein restliches Teilstück 18 verbleibt. Das abgetrennte Teilstück 17 wird in einer entsprechenden Aufnahme in den Adapter 5 eingesetzt, während das restliche Teilstück 18 in die Führung 13 eingesetzt wird und durch das Gegenlager 14 gegen das abgetrennte Teilstück 17 gepresst wird.

Im Folgenden wird das erfindungsgemäße Verfahren näher erläutert. Nachdem das Kupplungsstück 12 in die beiden Teilstücke 17 und 18 getrennt wurde und diese beiden in die Probenaufnahme 6 eingesetzt wurden, wird die Zug-Druckmesseinrichtung 4 auf Null oder einen bestimmten Ausgangswert eingestellt. Sodann wird die Überwurfschraube 11 mit der medienführenden Leitung mit der Drehmoment- und Drehwinkelmesseinrichtung verbunden und an dem Prüfungsstück 12 positioniert, so dass nun ein Einschraubvorgang beginnen kann.

Dieser Einschraubvorgang wird solange fortgesetzt, bis der Wulst 10 der medienführenden Leitung 9 über die Überwurfschraube 11 auf das abgetrennte Teilstück 17 des Kupplungsstückes 12 eine vorbestimmte Kraft ausübt, die die Zug- und Druckmesseinrichtung 4 anzeigt. Diese Kraft wurde vorher ermittelt und entspricht in ihrer Höhe der Kraft, die notwendig ist, um eine ausreichende Dichtheit der medienführenden Leitung 9 in dem Kupplungsstück 12 zu erreichen, aber gering genug ist, um den Wulst 10 der medienführenden Leitung 9 nicht zu zerstören.

Sobald diese Kraft angezeigt wird, stoppt der Einschraubvorgang und das hierbei angezeigte Drehmoment wird festgehalten.

Da sowohl das Kupplungsstück 12 als auch die medienführende Leitung 9 und die Überwurfschraube 11 Serienteile sind, ist nun ein exaktes Soll-Anzugsmoment für die Überwurfschraube 11 bekannt.

Werden medienführende Leitungen 9, Überwurfschraube 11 und Kupplungsstück 12 von unterschiedlichen Herstellern bezogen, so wird mit jedem Bauteil der soeben beschriebene Versuch durchgeführt, da es möglich sein kann, dass unterschiedliche Hersteller auch unterschiedliche Herstellverfahren für die einzelnen Bauteile, unterschiedliche Materialien und/oder unterschiedlichen Oberflächenbeschichtungen verwenden. Dementsprechend wird für jede erlaubte Bauteilkombination das Soll-Anzugsmoment an den Originalbauteilen ermittelt.

Wird anstelle eines Kupplungsstückes ein Bauteil verwendet, beispielsweise ein Pumpengehäuse, so wird aus diesem Pumpengehäuse ein Probenstück mit dem Gewinde entnommen und entsprechend den obigen Erläuterungen präpariert und in die Probenaufnahmen eingesetzt.

Das erfindungsgemäße Verfahren eignet sich somit sowohl, Schraubenkräfte allgemein an Mustern zu ermitteln als auch an den realen Bauteilen, indem die Proben den realen Bauteilen entnommen werden.

Das erfindungsgemäße Verfahren kann aber nicht nur zur Ermittlung der notwendigen Schraubenkraft zur Herstellung einer mediendichten Verbindung herangezogen werden, sondern auch, um bei Stiftverschraubungen das notwendige Anzugsmoment zu ermitteln.

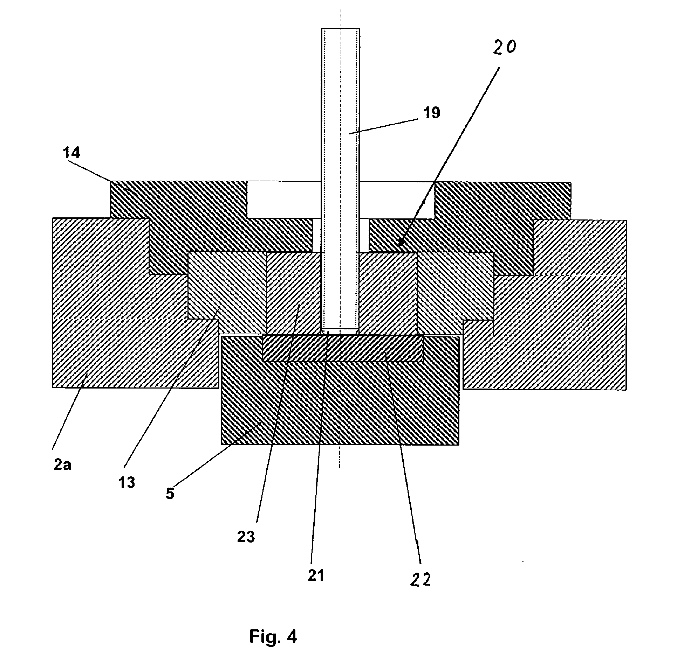

Eine derartige Anordnung ist in Figur 4 dargestellt. Anstelle der medienführenden Leitung 9 und der Überwurfschraube 11 wird nun ein Gewindestift 19 verwendet, der in das Sackloch, beispielsweise eines Zylinderkopfes oder eines Kurbelgehäuses, eingeschraubt werden soll. Dementsprechend wird an der Einschraubstelle aus dem Bauteil eine Probe 20 entnommen, die das aufnehmende Sackloch 21 enthält. Dieses Probenstück 20 wird analog des Kupplungsstückes 12 in zwei Teilstücke 22, 23 auf Höhe des inneren Auslaufs geteilt, wobei auch das restliche Teilstück wieder mit einer Längsnut versehen wird, in die die nicht dargestellte Nase der Führung 13 eingreift. Das abgetrennte Teilstück wird wie im vorigen Beispiel in den Adapter 5 der Zug- und Druckmesseinrichtung eingelegt.

Auch hier wird das aufzubringende Anschraubmoment dadurch ermittelt, dass der Gewindestift so lange in die Probe 20 eingeschraubt wird, bis er mit seiner eingeschraubten Stirnseite auf das abgetrennte Teilstück 22 eine vorher definierte Kraft ausübt, die die Zug- und Druckmesseinrichtung 4 anzeigt.

## Patentansprüche

1. Verfahren zum Ermitteln des Soll-Anzugsmomentes von Schraubenverbindungen, bestehend aus einem ersten Bauteil mit Außengewinde (Schraube) und einem zweiten Bauteil mit Innengewinde (Mutternteil), wobei während des Verschraubens das aufgebrachte Drehmoment gemessen wird,
**dadurch gekennzeichnet,**
- **dass** das Bauteil mit Innengewinde am inneren Gewindeauslauf senkrecht zur Gewindelängsachse geteilt wird,
- **dass** das abgeteilte Bauteil in Kontakt mit dem Rest des zweiten Bauteiles gehalten wird und
- **dass** die auf das abgeteilte Bauteil ausgeübte Kraft beim Einschrauben des ersten Bauteils in das restliche zweite Bauteil gemessen wird.

2. Verfahren nach Anspruch 1,
**dadurch gekennzeichnet, dass** beide Bauteile Originalbauteile sind.

3. Verfahren nach Anspruch 1 oder 2,
**dadurch gekennzeichnet, dass** das restliche zweite Bauteil gegen Verdrehen während des Einschraubens des ersten Bauteils gesichert wird.

4. Verfahren nach einem der Ansprüche 1 bis 3,
**dadurch gekennzeichnet, dass** neben dem Drehmoment auch der Drehwinkel gemessen wird.

5. Verwendung des Verfahrens nach einem der Ansprüche 1 bis 4 zum Ermitteln des Soll-Anzugsmomentes von Überwurfschrauben (12) an medienführenden Leitungen (9) von Kraftfahrzeugen.

6. Verwendung des Verfahrens nach einem der Ansprüche 1 bis 4 zum Ermitteln des Soll-Anzugsmomentes von in Sacklochbohrungen (21) einzuschraubenden Gewindestiften (19).

7. Vorrichtung zur Durchführung des Verfahrens nach einem der Ansprüche 1 bis 6,
**dadurch gekennzeichnet, dass** ein Rahmen (2) vorgesehen ist, in dem das geteilte zweite Bauteil (12 bzw. 22, 23) zwischen einem Gegenlager und einer Kraftmesseinrichtung (4) eingespannt ist und dass eine Drehmomentmesseinrichtung (7) vorgesehen ist, die mit dem ersten Bauteil (11 bzw. 19) zusammenwirkt.

8. Vorrichtung nach Anspruch 7,
**dadurch gekennzeichnet, dass** restliche zweite Bauteil (12 bzw. 23) in eine Führung (13) eingesetzt ist.

9. Vorrichtung nach Anspruch 8,
**dadurch gekennzeichnet, dass** die Führung (13) eine Nase aufweist, die in eine an dem restlichen zweiten Bauteil (12 bzw. 23) vorgesehenen Längsnut (15) eingreift.
